# EUROPÄISCHE PATENTSCHRIFT

(11) **EP 2 777 873 B1**
(45) Veröffentlichungstag und Bekanntmachung des Hinweises auf die Patenterteilung: **17.06.2015**
(21) Anmeldenummer: 13001952.4
(22) Anmeldetag: 15.04.2013
(51) Int. Cl.: B23Q 3/155, B23Q 1/01, B23Q 3/157

(54) **Vertikales Bearbeitungszentrum in Gantry-Bauform mit einem maschinenseitig integrierten Werkzeugmagazinspeicher und Verfahren zur Werkzeugumladung**
Vertical processing centre in gantry form with a tool magazine storage unit integrated into the machine and method for switching tools
Centre de traitement vertical en forme de portique doté d'un stockage de magasin d'outils intégré côté machine et procédé de changement d'outil

(30) Priorität: 12.03.2013 EP 13001233
(43) Veröffentlichungstag der Anmeldung: 17.09.2014
(73) Patentinhaber: Maschinenfabrik Berthold Hermle AG, 78559 Gosheim (DE)
(72) Erfinder: Bernhard, Franz-Xaver, 78549 Spaichingen (DE); Schwörer, Tobias, 78598 Königsheim (DE); Ramsperger, Bernd, 78559 Gosheim (DE)
(74) Vertreter: Hoefer & Partner

(56) Entgegenhaltungen:
- EP-A1- 2 140 969
- EP-B1- 2 295 199
- DE-A1-102009 025 099
- DE-U1-202011 001 493
- JP-A- 2000 210 827
- US-A- 3 312 370

## Beschreibung

Die Erfindung betrifft ein vertikales Bearbeitungszentrum in Gantry-Bauweise, insbesondere für die spanende Fräs-, Bohr- und/oder Drehbearbeitung, mit einem zwei Seitenwandungen aufweisenden Maschinengestell für die Aufnahme einer werkzeugtragenden und einer werkstücktragenden Baugruppe, mit einem bewegbaren Pick-Up-Werkzeugmagazinspeicher innerhalb der beiden Seitenwandungen des Maschinengestells für einen Werkzeugwechsel im Pick-Up-Verfahren, und mit einer Maschinenumhausung, die das Bearbeitungszentrum komplett umschließt.

Ein Bearbeitungszentrum der eingangs genannten Art ist in der EP 2 295 199 B1 oder in der DE 10 2009 050 174 B4 beschrieben und abgebildet.

Die Erfindung betrifft ferner ein Verfahren zur automatischen Werkzeugumladung eines bewegbaren und maschinenseitig integrierten Pick-Up-Werkzeugmagazinspeichers.

Ein Verfahren zur automatischen Werkzeugumladung eines bewegbaren und maschinenseitig integrierten Pick-Up-Werkzeugmagazinspeichers nach dem Stand der Technik ist in der DE 43 04 361 A1 beschrieben und abgebildet.

Unter dem Begriff "vertikales Bearbeitungszentrum in Gantry-Bauweise" wird im Sinne der vorliegenden Erfindung ein 5-Achs-Bearbeitungszentrum verstanden, bei dem bei der Werkstückbearbeitung die drei linearen Vorschubbewegungen (X-Y-Z) durch die vertikal ausgerichtete Werkzeugspindel und die zwei rotativen Vorschubbewegungen (C-A) durch den schwenk- und drehbaren Werkstücktisch ausgeführt werden. Werkstücke können dadurch in der Regel deutlich effektiver und genauer bearbeitet werden, da bei der simultanen bzw. gleichzeitigen Bearbeitung in allen fünf Raumrichtungen (X-Y-Z-C-A) das Bearbeitungswerkzeug nur in den drei linearen Raumrichtungen (X-Y-Z) und das Werkstück nur in den zwei rotativen Raumrichtungen (C-A) bewegt werden muss. Das Einsatzgebiet von vertikalen 5-Achs-Bearbeitungszentren in Gantry-Bauweise reicht vom allgemeinen Maschinenbau über den Automobilbau bis zum Werkzeug- und Formenbau und der Medizintechnik. Neben Eisenmetallen können genauso Nichteisenmetalle oder Kunststoffe bearbeitet werden.

Unter dem Begriff "maschinenseitig integrierten Werkzeugmagazinspeicher" wird im Sinne der vorliegenden Erfindung ein Werkzeugmagazinspeicher für die Aufnahme und Lagerung einer Vielzahl von Bearbeitungswerkzeugen verstanden, der vollständig im Maschinengestell des Bearbeitungszentrums angeordnet ist und somit keine zusätzliche Aufstellfläche außerhalb des Maschinengestells beansprucht. Somit müssen die Außenabmessungen des Bearbeitungszentrums in den zwei horizontalen Raumrichtungen (X-Y) durch den komplett im Maschinengestell integrierten Werkzeugmagazinspeicher nicht vergrößert werden. Dies alles stellt unter dem Gesichtspunkt der sehr teuren Aufstellfläche für ein Bearbeitungszentrum keinen unbedeutenden wirtschaftlichen Gesichtspunkt dar. Je nach Größe des Maschinengestells in den horizontalen Raumrichtungen (X-Y) ist der im Maschinengestell vollständig integrierte Werkzeugmagazinspeicher für die Aufnahme von ungefähr 30 bis 50 Bearbeitungswerkzeugen ausgelegt. Je größer das Maschinengestell in seinen horizontalen Raumrichtungen (X-Y) ist, desto größer kann der Werkzeugmagazinspeicher ausgeführt werden.

Unter dem Begriff "Werkzeugwechsel im Pick-Up-Verfahren" wird im Sinne der vorliegenden Erfindung ein spezielles Werkzeugwechselverfahren verstanden, bei dem die vertikal ausgerichtete Werkzeugspindel das Bearbeitungswerkzeug direkt und ohne zu Hilfenahme einer externen Werkzeugwechselvorrichtung vom Werkzeugmagazinspeicher übernehmen und an diesen auch wieder abgeben kann. Ein Werkzeugwechsel im Pick-Up-Verfahren ist ein einfaches und prozesssicheres Verfahren und daher den anderen bekannten Werkzeugwechselverfahren in der Regel überlegen.

Unter dem Begriff "Pick-Up-Werkzeugmagazinspeicher" wird ein Werkzeugmagazinspeicher verstanden, mit dem ein Werkzeugwechsel im Pick-Up-Verfahren durchgeführt werden kann.

Unter dem Begriff "Maschinenumhausung" wird im Sinne der vorliegenden Erfindung eine trennende Schutzeinrichtung verstanden, welche die Arbeitsstationen im Bearbeitungszentrum umfangsseitig komplett umschließt. Die Maschinenumhausung schützt die Umgebung vor umherfliegenden Spänen, Kühlschmierstoffpartikeln oder Werkzeugbruchstücken, die aufgrund eines Maschinencrashs entstehen können, und verringert den außerhalb der Maschinenumhausung auftretenden Bearbeitungsschallpegel. Außerdem verhindert die Maschinenumhausung den Zugriff des Bedieners zu den gefährlichen und sehr schnellen Vorschub- und Spindelbewegungen der Werkzeugspindel, zu den sehr schnellen Vorschubbewegungen des Werkstücktisches und zu den sehr schnellen Positionierbewegungen des Werkzeugmagazinspeichers. Um auf die Arbeitsstationen des Bearbeitungszentrums zugreifen zu können, ist die Maschinenumhausung mit einer oder mehreren Zugangstüren versehen. Ferner weist die Maschinenumhausung eine oder mehrere Sichtscheiben auf, durch die von außen in die Arbeits- und ggf. in die Wartungsstationen des Bearbeitungszentrums eingesehen werden kann.

Unter dem Begriff "Arbeitsstation" wird im Sinne der vorliegenden Erfindung der Raum in einem Bearbeitungszentrum verstanden, in dem die Werkstückbearbeitung stattfindet; das heißt, der Raum, in dem die Bearbeitungsspäne anfallen. Weiterhin wird unter dem Begriff "Arbeitsstation" auch noch der Raum in einem Bearbeitungszentrum verstanden, in dem die Bearbeitungswerkzeuge gespeichert werden und die Werkzeugumladung stattfindet. An einem Bearbeitungszentrum können sich ein oder mehrere Arbeitsstationen befinden, die alle für das Bedienpersonal (Werker) in ergonomisch sinnvoller Weise zugänglich gemacht werden müssen, d. h. Arbeitsstation mit Bedienerzugang.

Bei einem Bearbeitungszentrum der eingangs genannten Gattung wird es allgemein als Nachteil angesehen, dass die Speicherkapazität des Werkzeugmagazinspeichers im Bearbeitungszentrum doch relativ stark durch die Abmessungen des Maschinengestells reglementiert ist, so dass sehr oft die Verwendung eines an das Bearbeitungszentrum angestellten Zusatzmagazins notwendig wird. Insbesondere bei kleineren und mittleren Bearbeitungszentren der eingangs genannten Gattung wirkt sich die Begrenzung der Speicherkapazität des Werkezugmagazinspeichers durch das Maschinengestell als sehr negativ aus. Unter kleineren und mittleren Bearbeitungszentren sind Bearbeitungszentren zu verstehen, bei denen der Verfahrweg der Werkzeugspindel in der horizontalen Querrichtung (X-Richtung) ungefähr zwischen 300 mm und 800 mm liegt. Bei den heutzutage durchzuführenden, sehr komplexen und sehr langwierigen Bearbeitungsaufgaben wird in der Regel immer eine Vielzahl von unterschiedlichen oder gleichen Werkzeugen benötigt. Unter einem gleichen Werkzeug ist ein sogenanntes Schwesterwerkzeug zu verstehen. Ein Schwesterwerkzeug wird dann aus dem Werkzeugmagazinspeicher in die Werkzeugspindel eingewechselt, wenn eine bestimmte Verschleißgrenze am ursprünglichen Bearbeitungswerkzeug überschritten wurde, so dass mit dem ursprünglichen Bearbeitungswerkzeug keine weitere Bearbeitung mehr möglich ist. Ein derartiges Schwesterwerkzeug gleicht dem ursprünglichen Bearbeitungswerkzeug in identischer Weise. Diese Vielzahl von Werkzeugen muss durch einen Werkzeugmagazinspeicher in ausreichend großer Speicherkapazität bereitgestellt werden. 70 Bearbeitungswerkzeuge sind für eine normale Bearbeitungsaufgabe heutzutage keine Seltenheit mehr.

Eine Erweiterung der Speicherkapazität eines maschinenseitigen Werkzeugmagazinspeichers der eingangs genannten Art ist zum Beispiel in der EP 2 295 199 B1 dargestellt und beschrieben. Durch eine am Maschinengestell des Bearbeitungszentrums angestellte Speichererweiterung kann zwar die Speicherkapazität des maschinenseitigen Werkzeugmagazinspeichers wesentlich vergrößert werden, dies aber zum Preis einer vergrößerten Aufstellfläche für das Bearbeitungszentrum. Durch die am Maschinengestell angestellte bzw. angebaute Speichererweiterung wird die Aufstellfläche für das Maschinengestell und somit für das Bearbeitungszentrum merklich vergrößert. Außerdem ist zum Betrieb der Speichererweiterung auch noch ein zusätzliches aufwändig aufgebautes kraftbetriebenes Werkzeughandling in der Speicherweiterung und somit außerhalb des Bearbeitungszentrums notwendig, um die Bearbeitungswerkzeuge von der Speichererweiterung in den maschinenseitigen Werkzeugmagazinspeicher oder umgekehrt umzuladen. Dieser beidseitige Umladevorgang nimmt aufgrund der relativ großen Abmessungen der Speichererweiterung auch noch erhebliche Zeit in Anspruch.

Eine andere Art der Erweiterung der Speicherkapazität eines maschinenseitigen Werkzeugmagazinspeichers der eingangs genannten Art ist in der DE 10 2009 050 174 B4 dargestellt und beschrieben. In der DE 10 2009 050 717 B4 ist der maschinenseitige integrierte Werkzeugmagazinspeicher fast vollständige außerhalb des U-förmigen Maschinengestells angeordnet, so dass die Speicherkapazität des Werkzeugmagazinspeichers im Bearbeitungszentrum nur noch sehr geringfügig durch die Abmessungen des U-förmigen Maschinengestells reglementiert ist. Der Nachteil dieser Lösung ist aber eine Vergrößerung der Aufstellfläche und die Verkomplizierung des Aufbaus des U-förmigen Maschinengestells. In diesem Fall muss das U-förmige Maschinengestell gegenüber der eingangs genannten Maschinengattung wesentlich verändert werden.

Somit kann ein klassischer Zielkonflikt festgestellt werden. Auf der einen Seite sind zur Erlangung einer erhöhten Werkzeugspeicherkapazität mehr Aufstellfläche und ein aufwändiges und zeitintensives Werkzeughandling für die Werkzeugumladung notwendig. Auf der anderen Seite kostet die zusätzliche Aufstellfläche und das zusätzliches aufwändige und zeitintensive Werkzeughandling für die Werkzeugumladung Geld. Außerdem wird durch die Speichererweiterung die Aufstellung des Bearbeitungszentrums unnötig verkompliziert. Des Weiteren wird aufgrund der relativ langen Zeiten für die Umladung der Bearbeitungswerkzeuge von der Speichererweiterung in den maschinenseitigen Werkzeugmagazinspeicher und umgekehrt der gesamte Bearbeitungsprozess eventuell negativ gestört, z. B. mögliche Wartezeiten bei der Bearbeitung bis ein entsprechendes Schwesterwerkzeug aus dem Zusatzmagazin für den Einwechselvorgang in die Werkzeugspindel bereitgestellt werden kann.

Vor diesem Hintergrund liegt der vorliegenden Erfindung die Aufgabe zugrunde, das eingangs erwähnte Bearbeitungszentrum unter Beibehaltung seiner Vorteile derart weiterzubilden, dass eine Vergrößerung der Speicherkapazität des maschinenseitigen Werkzeugmagazinspeichers ohne Vergrößerung der Aufstellfläche einhergeht, d. h. eine Speicherweiterung des maschinenseitigen Werkzeugmagazinspeichers soll ohne Beeinflussung der ursprünglichen Aufstellfläche des Bearbeitungszentrums realisierbar sein. Die Aufstellfläche mit und ohne Speichererweiterung muss die gleiche bleiben.

Weiterhin soll die Vergrößerung der Speicherkapazität keinen signifikanten Einfluss auf die Werkzeugwechselzeiten haben, d. h. ein Werkzeugwechsel soll zeitnah und somit ohne größere Bewegungsabläufe erfolgen.

Ferner soll die Vergrößerung der Speicherkapazität des maschinenseitigen Werkzeugmagazinspeichers mit konstruktivem und fertigungstechnisch geringem Aufwand möglich sein, insbesondere sollen durch die Vergrößerung der Speicherkapazität keine größeren baulichen Veränderungen am U-förmige Maschinengestell notwendig werden.

Diese erfindungsgemäße Aufgabe wird bei einem vertikalen Bearbeitungszentrum in Gantry-Bauweise, insbesondere für die spanende Fräs-, Bohr- und/oder Drehbearbeitung, mit einem zwei Seitenwandungen aufweisenden Maschinengestell für die Aufnahme einer werkzeugtragenden und einer werkstücktragenden Baugruppe, mit einem bewegbaren Pick-Up-Werkzeugmagazinspeicher innerhalb der beiden Seitenwandungen des Maschinengestells für einen Werkzeugwechsel im Pick-Up-Verfahren, und mit einer Maschinenumhausung, die das Bearbeitungszentrum komplett umschließt, dadurch gelöst, dass sich unterhalb des Pick-Up-Werkzeugmagazinspeichers ein freier Raum befindet, in dem sich noch mindestens ein weiteres, gleichartig zum Pick-Up-Werkzeugmagazinspeicher aufgebautes Schwestermagazin befindet, und dass ein kraftbetriebenes Umladehandling innerhalb der Maschinenumhausung an einer Zugangsöffnung des Maschinengestells vorhanden ist, mit dem Bearbeitungswerkzeuge von dem Schwestermagazin in den Pick-Up-Werkzeugmagazinspeicher und umgekehrt umgeladen werden können.

Aufgrund der erfinderischen Ausgestaltung kann bei Bearbeitungszentren der eingangs genannten Art die Speicherkapazität eines maschinenseitigen Pick-Up-Werkzeugmagazinspeichers mit einfachen Mitteln erweitert werden, wenn im freien Raum unterhalb des Pick-Up-Werkzeugmagazinspeichers noch mindestens ein Schwestermagazin mit einem kraftbetriebenen Umladehandling an einer Zugangsöffnung am Maschinengestell angeordnet ist. Durch diese Anordnung wird gewissermaßen ein mehrstöckiger, beweglicher Pick-Up-Werkzeugmagazinturm mit einem Werkzeuglift geschaffen. Die Speichererweiterung der erfindungsgemäßen Art hat folgende Vorteile:
a) Der Pick-Up-Werkzeugmagazinspeicher ist vollständig innerhalb des Maschinengestells geordnet.
b) Mindestens ein gleichartig zum Pick-Up-Werkzeugmagazinspeicher aufgebautes Schwestermagazin ist unterhalb des Pick-Up-Werkzeugmagazinspeichers ebenfalls vollständig innerhalb des Maschinengestells angeordnet.
c) Das kraftbetriebene Umladehandling, mit dem Bearbeitungswerkzeuge von dem maschinenseitigen Schwestermagazin in den maschinenseitigen Pick-Up-Werkzeugmagazinspeicher und umgekehrt umgeladen werden können, ist an einer Zugangsöffnung des Maschinengestells angeordnet.

Vorteilhafte Weiterbildungen ergeben sich aus den Unteransprüchen.

Gemäß einer bevorzugten Weiterbildung besteht der Pick-Up-Werkzeugmagazinspeicher aus einem kreisringförmig aufgebauten, motorisch angetriebenen Werkzeugmagazin mit einem um eine vertikale Achse drehbar gelagerten Magazinring mit Werkzeughaltern zur Aufnahme von Bearbeitungswerkzeugen.

Gemäß einer bevorzugten Weiterbildung ist der Pick-Up-Werkzeugmagazinspeicher über einen Motor mit Untersetzungsgetriebe antreibbar.

Gemäß einer bevorzugten Weiterbildung besteht das Untersetzungsgetriebe aus einer Zahnriemenstufe und aus einer Zahnradstufe.

Gemäß einer bevorzugten Weiterbildung ist der drehbare Magazinring über ein Vier-Punkt-Wälzlager mit dem Maschinengestell verbunden.

Weiterhin weist gemäß einer bevorzugten Ausgestaltung das Vier-Punkt-Wälzlager einen Innenring auf, über den das Vier-Punkt-Wälzlager fest mit dem Maschinengestell verbunden, vorzugsweise verschraubt ist

Das Vier-Punkt-Wälzlager weist vorteilhafterweise einen drehbaren Außenring auf, an dem die Werkzeughalter und ein Zahnkranzelement für die Zahnradstufe des Untersetzungsgetriebes des Motors angeordnet sind.

Vorteilhafterweise ist das Schwestermagazin über ein kreisringförmiges Adapterstück kraft- und/oder formschlüssig mit dem drehbaren Magazinring des Pick-Up-Werkzeugmagazinspeichers verbunden. Dies hat den Vorteil, dass eine separate Lagerung und ein separater Antrieb für das Schwestermagazin nicht notwendig sind.

Die Werkzeughalter am Pick-Up-Werkzeugmagazinspeicher und am Schwestermagazin sind gemäß einer bevorzugten Weiterbildung als elastisch verformbare U-förmige Halteklammern ausgeführt. Bei dieser Art von Werkzeugaufnahme kann der Werkzeughalter des Bearbeitungswerkzeuges kraft- und/oder formschlüssig von der elastisch verformbaren U-förmigen Halteklammer aufgenommen und gehalten werden. Gleichzeitig wird bei derartigen Werkzeugaufnahmen immer ein gewisser Kraftaufwand benötigt, um das Bearbeitungswerkzeug mit dem Werkzeughalter in die Werkzeugaufnahme hinein- oder herauszudrücken.

Gemäß einer weiteren vorteilhaften Ausgestaltung besteht das Umladehandling aus einer pneumatisch verstellbaren 2-Achseinheit mit einer vertikalen Hochachse, einer rechtwinklig dazu angeordneten horizontalen Längsachse und einem Werkzeuggreifer mit zwei pneumatisch verstellbaren Greiferbacken zum Halten eines genormten kegelförmigen Werkzeugschaftes eines Bearbeitungswerkzeuges.

Vorteilhafterweise sind die vertikale Hochachse und die horizontale Längsachse durch jeweils einen kolbenstangenlosen Pneumatik-Zylinder gebildet.

Der Erfindung liegt ferner die Aufgabe zugrunde, ein Verfahren zur automatischen Werkzeugumladung in und aus einem bewegbaren Pick-Up-Werkzeugmagazinspeicher breitzustellen, durch welches sich ein optimaler Werkzeugfüllgrad im Pick-Up-Werkzeugmaschinenspeicher ergibt.

Unter dem Begriff "Werkzeugfüllgrad" wird im Sinne der vorliegenden Erfindung die Packungsdichte von aufzunehmenden Bearbeitungswerkzeugen im maschinenseitigen Pick-Up-Werkzeugmagazinspeicher verstanden.

Diese Aufgabe wird bei dem eingangs genannten Verfahren erfindungsgemäß dadurch gelöst, dass der maschinenseitige Pick-Up-Werkzeugmagazinspeicher über eine in der Maschinensteuerung des Bearbeitungszentrums implementierte Werkzeugverwaltung mit seinem Schwestermagazin oder mit seinen Schwestermagazinen in Kommunikation steht und die Bearbeitungswerkzeuge mit Hilfe des kraftbetriebenen Umladehandlings nach einer von dem aktuell abzuarbeitenden Bearbeitungsprogramm vorgegebenen und nach weitgehend platzoptimierten Ablagekriterien erstellten Umladeladeliste gesteuert von einem Schwestermagazin oder von mehreren Schwestermagazinen in den Pick-Up-Werkzeugmagazinspeicher oder umgekehrt so umgeladen werden können, dass der Werkzeugfüllgrad im Pick-Up-Werkzeugmagazinspeicher optimal ausgefüllt ist und sich somit möglichst eine große Anzahl von Bearbeitungswerkzeugen mit teilweise sehr unterschiedlichen geometrischen Abmessungen im maschinenseitigen Pick-Up-Werkzeugmagazinspeicher befinden und dadurch auch relativ zeitnah vom Pick-Up-Werkzeugmagazinspeicher in die Werkzeugspindel eingewechselt werden können.

Aufgrund des erfinderischen Verfahrens kann ein hoher Werkzeugfüllgrad bzw. eine hohe Packungsdichte bei der Bestückung des maschinenseitigen Pick-Up-Werkzeugmagazinspeichers, insbesondere an dem erfindungsgemäßen Bearbeitungszentrum, erzielt werden. Die aufzunehmenden Bearbeitungswerkzeuge werden dabei nach einem vorausschauend berechneten Ein- bzw. Umlagerungsschema in den maschinenseitigen Pick-Up-Werkzeugmagazinspeicher ein- bzw. umsortiert. Dabei ist der Werkzeugdurchmesser des Bearbeitungswerkzeugs das prägende Hauptkriterium für die Sortierung. Das heißt, es wird immer versucht, den Typenmix von großen und kleinen Bearbeitungswerkzeugen bei der Ablage der Bearbeitungswerkzeuge in den maschinenseitigen Pick-Up-Werkzeugmagazinspeicher so zu bestimmen, dass eine möglichst große Anzahl von Bearbeitungswerkzeugen abgelegt werden kann. Obwohl die Anzahl der Werkzeugablageplätze in dem maschinenseitigen Pick-Werkzeugmagazinspeicher in der Regel durch die konstruktive Ausgestaltung fest vorgegeben ist, kann die Packungsdichte im Werkzeugmagazinspeicher durchaus stark variieren. So können zum Beispiel in dem Pick-Up-Werkzeugmagazinspeicher des dargestellten Ausführungsbeispiels bei gleicher Teilung der Ablageplätze im Pick-Up-Werkzeugmagazinspeicher (Teilungsabstand Werkzeugmittelpunkt zu Werkzeugmittelpunkt immer 90 mm) maximal 36 Werkzeuge mit einem maximalen Werkzeugdurchmesser von 80 mm eingelagert werden. Da in der Regel auch Werkzeuge mit einem größeren Werkzeugdurchmesser als 80 mm im Pick-Up-Werkzeugmagazinspeicher eingelagert werden müssen, kann bei einer ungünstigen Ablagesortierung der Fall auftreten, dass die beiden Ablageplätze neben einem großen Werkzeugdurchmesser, z. B. Bearbeitungswerkzeug mit einem Werkzeugdurchmesser von 120 mm, nicht mehr mit einem ähnlich großen Werkzeug belegt werden kann, weil das Werkzeug mit dem großen Werkzeugdurchmesser die beiden Nebenablageplätze mehr oder weniger stark überschneidet. So kann zum Beispiel im dargestellten Ausführungsbeispiel ein Bearbeitungswerkzeug mit einem Werkzeugdurchmesser von 120 mm maximal neben zwei Bearbeitungswerkzeug mit einem Werkzeugdurchmesser von 40 mm abgelegt werden. Durch diese Einschränkung wird die Ablage im Werkzeugmagazinspeicher zusätzlich verkompliziert. Wird die Sortierung im Werkzeugmagazinspeicher nur nach rein zeitoptimieren Kriterien vorgenommen, d. h. die Sortierung der Werkzeuge entspricht streng der Einsatzreihenfolge im Bearbeitungsprogramm, so ergibt ist in der Regel kein optimaler Werkzeugfüllgrad im Werkzeugmagazinspeicher. In der EP 1 870 200 B1 ist ein gängiges Verfahren nach dem Stand der Technik zur zeitoptimierten Werkzeugsortierung dargestellt und beschrieben. Ein nicht optimaler Werkzeugfüllgrad wirkt sich aber wiederum negativ auf die Werkzeugwechselzeit aus, da in diesem Fall nicht die volle Werkzeuglagerkapazität im maschinennahen Pick-Up-Werkzeugmagazinspeicher ausgenutzt werden kann und gegebenenfalls Bearbeitungswerkzeuge von einem weiter entfernten Schwestermagazinspeicher zeitaufwendig herbeigeschafft werden müssen. Außerdem kommt der Vorteil der zeitoptimierten Sortierung nur bei relativ langsam bewegbaren Werkzeugmagazinspeichern voll zur Wirkung. Zum Beispiel benötigt der im dargestellten Ausführungsbeispiel gezeigte Pick-Up-Werkzeugmagazinspeicher nur eine Sekunde für eine 180° Umdrehung, so dass in diesem Fall eine zeitoptimierte Sortierung keinen praktischen Vorteil mehr mit sich bringt. Ganz im Gegensatz zur erfindungsgemäßen platzoptimierten Werkzeugsortierung bzw. zur platzoptimierten Werkzeugumladung.

Weitere vorteilhafte Ausgestaltungen des erfindungsgemäßen Verfahrens ergeben sich aus den Unteransprüchen.

In einer vorteilhaften Ausgestaltung kann die platzoptimierte Umladeliste vor der eigentlichen Werkstückbearbeitung durch einen in der Maschinensteuerung simulierten Ablauf des Bearbeitungsprogramms erstellt werden. Dadurch kann die automatische platzoptimierte Werkzeugumladung mit dem kraftbetriebenen Umladehandling schon vor dem Start der eigentlichen Werkstückbearbeitung durchgeführt werden, so dass vor dem eigentlichen Beginn der Werkstückbearbeitung der Pick-Up-Werkzeugmagazinspeicher schon einen optimalen auf das Bearbeitungsprogramm abgestimmten Werkzeugfüllgrad aufweist.

In einer weiteren vorteilhaften Ausgestaltung kann die platzoptimierte Umladeliste während der Werkstückbearbeitung durch einen auf das aktuell ablaufende Bearbeitungsprogramm vorausschauenden Algorithmus erstellt werden. Dadurch kann die automatische platzoptimierte Werkzeugumladung stetig und hauptzeitparallel zur Werkstückbearbeitung durchgeführt werden, so dass während der Werkstückbearbeitung der Pick-Up-Werkzeugmagazinspeicher stetig und hauptzeitparallel auf seinen optimalen Werkzeugfüllgrad umgeladen werden kann.

In einer weiteren vorteilhaften Ausgestaltung kann die Umladeliste aus einem vom Maschinenbediener anwählbaren Mix von platzoptimierten und zeitoptimerten Ablagekriterien erstellt werden, so dass der Pick-Up-Werkzeugmagazinspeicher über das kraftbetriebene Umladehandling mehr zeitoptimiert oder mehr platzoptimiert mit Bearbeitungswerkzeugen umgeladen werden kann.

Weitere Einzelheiten, Merkmale und Vorteile der Erfindung ergeben sich aus der nachfolgenden Beschreibung anhand der Zeichnungen. Es zeigen:

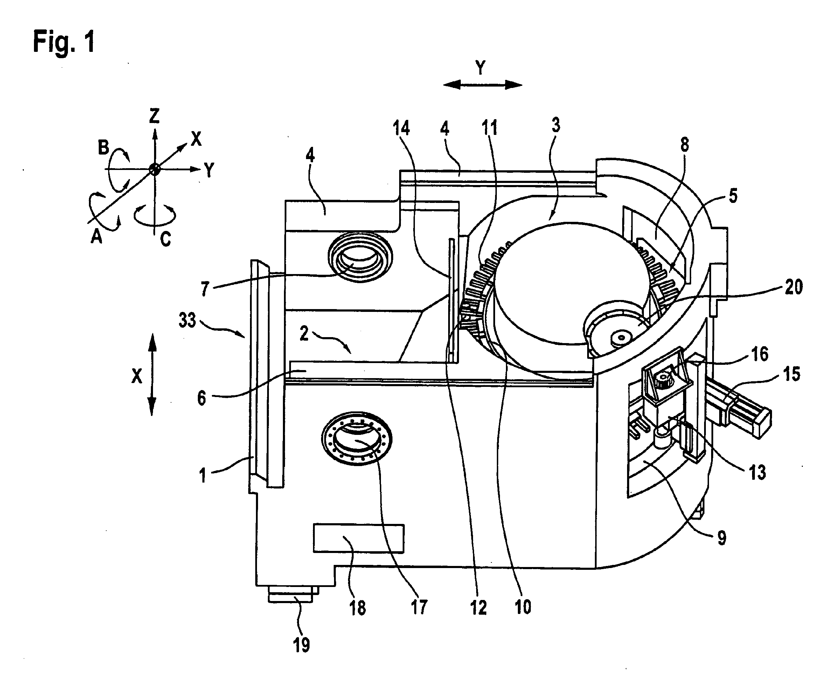

- Figur 1: eine perspektivische Teilansicht eines erfindungsgemäßen Bearbeitungszentrums von seitlich oben,

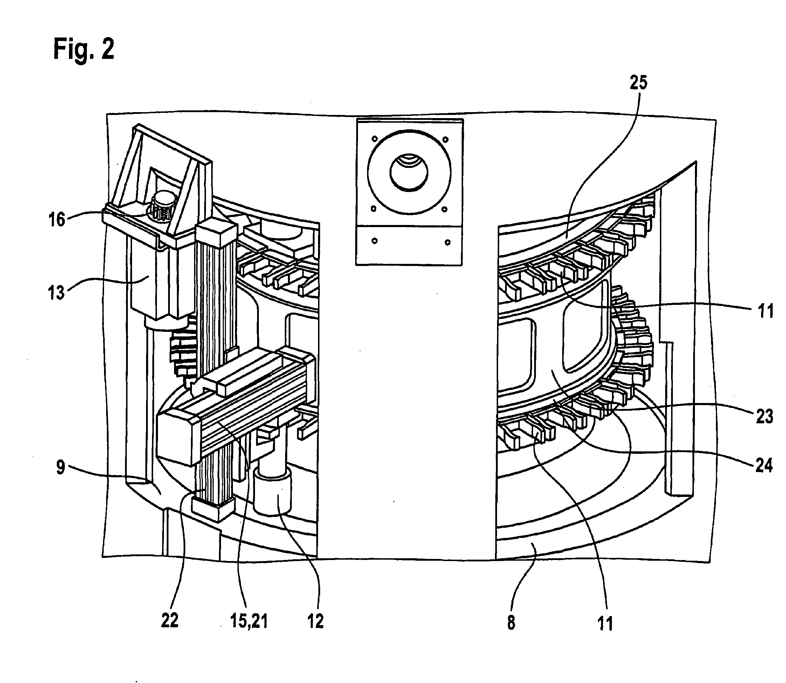

- Figur 2: eine perspektivische Teilansicht des erfindungsgemäßen Bearbeitungszentrums von hinten,

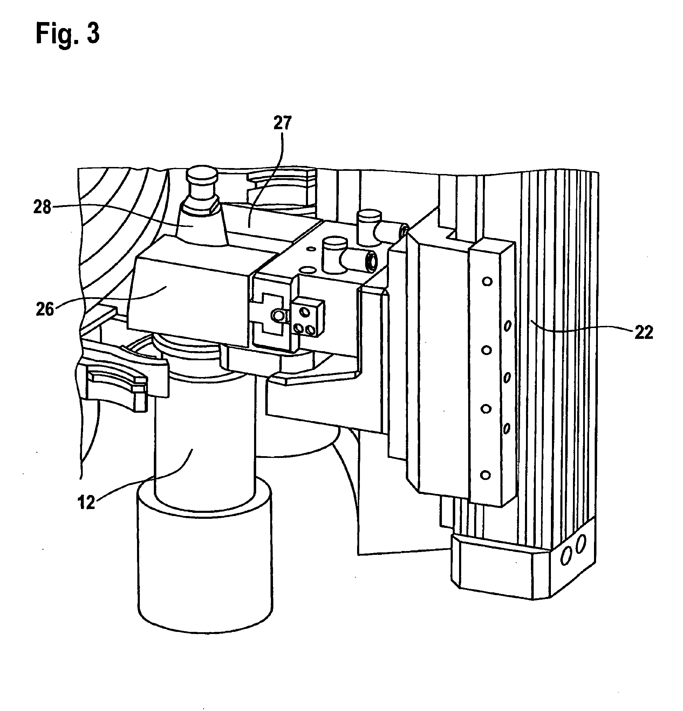

- Figur 3: eine Detailansicht eines Umladehandlings, und

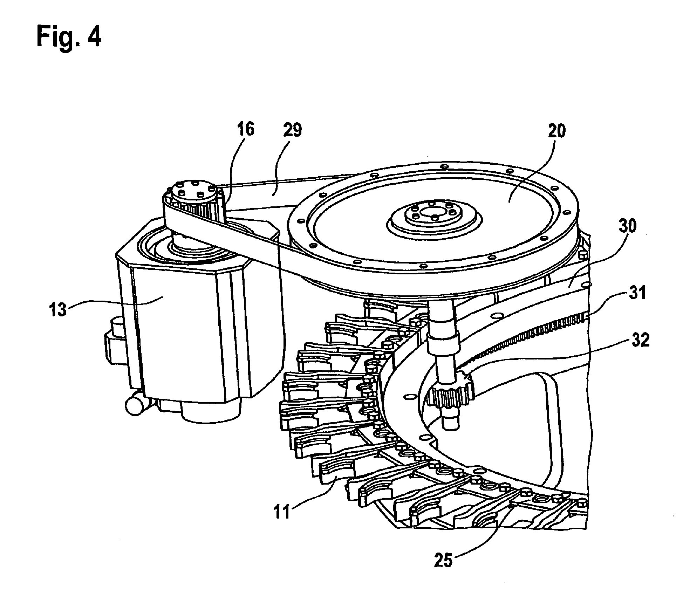

- Figur 4: eine Detailansicht des Antriebes eines Magazinringes.

Das erfindungsgemäße vertikale Bearbeitungszentrum in Gantry-Bauweise dient insbesondere als multifunktionales Bearbeitungszentrum für die spanende Fräs-, Bohr- und/oder Drehbearbeitung.

Das Bearbeitungszentrum weist ein im Wesentlichen U-förmiges Maschinengestell 1 mit zwei Seitenwandungen 4, 6 auf, welches über eine 3-Punkt-Lagerung auf in der Höhe verstellbaren Maschinenschuhen 19 gelagert ist und zur Aufnahme einer werkzeugtragenden und einer werkstücktragenden Baugruppe dient. Die werkzeugtragende Baugruppe ist in drei linearen Raumrichtungen (X-Y-Z) gesteuert verfahrbar und dient zur Aufnahme einer vertikal ausgerichteten Werkzeugspindel. Die werkstücktragende Baugruppe ist in zwei rotativen Raumrichtungen (A-C) gesteuert verfahrbar und dient zur Aufnahme eines Werkstücktisches.

In den Seitenwandungen 4, 6 des U-förmigen Maschinengestells 1 ist eine Aufnahme 7, 17 für die werkzeugtragende Baugruppe sowie eine Zugangsöffnung 18 für einen Späneförderer angeordnet. Weiterhin ist innerhalb der beiden Seitenwandungen 4, 6 ein bewegbarer Pick-Up-Werkzeugmagazinspeicher 5 für einen Werkzeugwechsel im Pick-Up-Verfahren gelagert.

In dem Maschinengestellt 1 ist weiterhin eine kraftbetätigte bewegliche Trennwand 14 vorgesehen, welche zwischen der Arbeitsstation der Werkzeugspindel 2 und der Arbeitsstation des Werkzeugmagazinspeichers 3 angeordnet ist. Außerdem ist eine Belade- und Entladeöffnung 33 zur Arbeitsstation der Werkzeugspindel 2 sowie eine Belade- und Entladeöffnung 8 zur Arbeitsstation des Werkzeugmagazinspeichers 3 vorgesehen. Durch die Belade- und Entladeöffnung 8 ist eine manuelle Be- und Entladung des Pick-Up-Werkzeugmagazinspeichers 5 möglich ist.

Das Maschinengestell 1 ist außerdem mit einer Maschinenumhausung umgeben, welche die das Bearbeitungszentrum komplett umschließt.

Unterhalb des Pick-Up-Werkzeugmagazinspeichers 5 ist ein freier Raum vorgesehen, in dem sich noch mindestens ein weiteres, gleichartig zum Pick-Up-Werkzeugmagazinspeicher 5 aufgebautes Schwestermagazin 24 befindet.

Der Pick-Up-Werkzeugmagazinspeicher 5 besteht aus einem kreisringförmig aufgebauten motorisch angetriebenen Werkzeugmagazin mit einem um eine vertikale Achse drehbar gelagerten Magazinring 10, der mit kraft- und/oder formschlüssigen Werkzeughaltern 11 zur Aufnahme von Bearbeitungswerkzeugen 12 versehen ist.

Der Pick-Up-Werkzeugmagazinspeicher 5 bzw. dessen Magazinring 10 kann über einen Motor 13 mit Untersetzungsgetriebe angetrieben werden. Das Untersetzungsgetriebe besteht aus einer Zahnriemenstufe 16, 20, 29 und aus einer Zahnradstufe 31, 32, wobei die Zahnriemenstufe ein Antriebsritzel 16, ein Abtriebszahnriemenrad 20 und einen Zahnriemen 29 umfasst und wobei die Zahnradstufe ein Zahnradritzel 32 und ein Zahnkranzelement 31 umfasst.

Der drehbare Magazinring 10 ist über ein sogenanntes Vier-Punkt-Wälzlager mit dem Maschinengestell 1 des Bearbeitungszentrums verbunden. Das Vier-Punkt-Wälzlager weist einen Innenring 30 und eine drehbaren Außenring 25 auf. Der Innenring 30 ist fest mit dem Maschinengestell 1 verschraubt, während sich an dem drehbaren Außenring 25 die Werkzeughalter 11 zur Aufnahme der Bearbeitungswerkzeuge 12 und ein Zahnkranzelement 31 für die Zahnradstufe des Untersetzungsgetriebes des Motors 13 befinden.

Das Schwestermagazin 24 ist über ein kreisringförmiges Adapterstück 23 kraft-und/oder formschlüssig mit dem drehbaren Magazinring 10 des Pick-Up-Werkzeugmagazinspeichers 5 verbunden, so dass eine separate Lagerung und ein separater Antrieb für das Schwestermagazin 24 nicht notwendig sind.

Die Werkzeughalter 11 zur Aufnahme der Bearbeitungswerkzeuge 12 am Pick-Up-Werkzeugmagazinspeicher 6 und am Schwestermagazin 24 sind als elastisch verformbare U-förmige Halteklammern ausgeführt. Bei dieser Art von Werkzeugaufnahmen wird der Werkzeughalter 11 des Bearbeitungswerkzeuges 12 kraft- und/oder formschlüssig von der elastisch verformbaren U-förmigen Halteklammer aufgenommen und gehalten. Gleichzeitig wird bei derartigen Werkzeughaltern 11 immer ein gewisser Kraftaufwand benötigt, um das Bearbeitungswerkzeug 12 mit dem Werkzeughalter 11 in die Werkzeugaufnahme hinein- oder herauszudrücken.

Innerhalb der Maschinenumhausung ist ein kraftbetriebenes Umladehandling 15 an einer Zugangsöffnung 9 des Maschinengestells 1 vorgesehen, mit dem Bearbeitungswerkzeuge 12 von dem maschinenseitigen Schwestermagazin 24 in den maschinenseitigen Pick-Up-Werkzeugmagazinspeicher 5 und umgekehrt umgeladen werden können.

Das Umladehandling 15 besteht aus einer pneumatisch verstellbaren 2-Achseinheit mit einer vertikalen Hochachse und einer rechtwinklig dazu angeordneten horizontalen Längsachse und einem Werkzeuggreifer mit zwei pneumatisch verstellbaren Greiferbacken 26, 27, die zum Halten eines genormten kegelförmigen Werkzeugschaftes 28 eines Bearbeitungswerkzeuges 12 dienen.

Die vertikale Hochachse und die horizontale Längsachse können durch jeweils einen kolbenstangenlosen Pneumatik-Zylinder 21, 22 gebildet werden.

Das vorstehend beschriebene vertikale Bearbeitungszentrum in Gantry-Bauweise ist besonders zur Durchführung eines speziellen Verfahrens zur automatischen Werkzeugumladung geeignet. Dabei steht der maschinenseitige Pick-Up-Werkzeugmagazinspeicher 5 über eine in der Maschinensteuerung des Bearbeitungszentrums implementierte Werkzeugverwaltung mit seinem Schwestermagazin 24 oder mit seinen Schwestermagazinen 24 in Kommunikation. Die Bearbeitungswerkzeuge 12 können mit Hilfe des kraftbetriebenen Umladehandlings 15 nach einer von dem aktuell abzuarbeitenden Bearbeitungsprogramm vorgegebenen und nach weitgehend platzoptimierten Ablagekriterien erstellten Umladeladeliste gesteuert von einem Schwestermagazin 24 oder von mehreren Schwestermagazinen 24 in den Pick-Up-Werkzeugmagazinspeicher 5 oder umgekehrt so umgeladen werden, dass der Werkzeugfüllgrad im Pick-Up-Werkzeugmagazinspeicher 5 optimal ausgefüllt ist und sich somit möglichst eine große Anzahl von Bearbeitungswerkzeugen 12 mit teilweise sehr unterschiedlichen geometrischen Abmessungen im maschinenseitigen Pick-Up-Werkzeugmagazinspeicher 5 befinden und dadurch auch relativ zeitnah vom Pick-Up-Werkzeugmagazinspeicher 5 in die Werkzeugspindel eingewechselt werden können.

Das Verfahren kann so ausgestaltet sein, dass die platzoptimierte Umladeliste vor der eigentlichen Werkstückbearbeitung durch einen in der Maschinensteuerung simulierten Ablauf des Bearbeitungsprogramms erstellt wird. Dadurch kann die automatische platzoptimierte Werkzeugumladung mit dem kraftbetriebenen Umladehandling 15 schon vor dem Start der eigentlichen Werkstückbearbeitung durchgeführt werden so dass vor dem eigentlichen Beginn der Werkstückbearbeitung der Pick-Up-Werkzeugmagazinspeicher 5 schon einen optimalen auf das Bearbeitungsprogramm abgestimmten Werkzeugfüllgrad aufweist.

Alternativ kann das Verfahren so ausgestaltet sein, dass die platzoptimierte Umladeliste während der Werkstückbearbeitung durch einen auf das aktuell ablaufende Bearbeitungsprogramm vorausschauenden Algorithmus erstellt wird. Dadurch kann die automatische platzoptimierte Werkzeugumladung stetig und hauptzeitparallel zur Werkstückbearbeitung durchgeführt werden so dass während der Werkstückbearbeitung der Pick-Up-Werkzeugmagazinspeicher 5 stetig und hauptzeitparallel auf seinen optimalen Werkzeugfüllgrad umgeladen werden kann.

Die Umladeliste kann auch aus einem vom Maschinenbediener anwählbaren Mix von platzoptimierten und zeitoptimerten Ablagekriterien erstellt werden, so dass der Pick-Up-Werkzeugmagazinspeicher 5 über das kraftbetriebene Umladehandling 15 mehr zeitoptimiert oder mehr platzoptimiert mit Bearbeitungswerkzeugen 12 umgeladen werden kann.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

**Bezugszeichenliste**

| | |
|---|---|
| 1 | Maschinengestell |
| 2 | Arbeitsstation der Werkzeugspindel |
| 3 | Arbeitsstation des Werkzeugmagazinspeichers |
| 4 | Seitenwandung |
| 5 | Pick-Up-Werkzeugmagazinspeicher |
| 6 | Seitenwandung |
| 7 | Aufnahme |
| 8 | Belade- und Entladeöffnung |
| 9 | Zugangsöffnung |
| 10 | Magazinring |
| 11 | Werkzeughalter |
| 12 | Bearbeitungswerkzeug |
| 13 | Motor |
| 14 | Trennwand |
| 15 | Umladehandling |
| 16 | Antriebsritzel |
| 17 | Aufnahme |
| 18 | Zugangsöffnung |
| 19 | Maschinenschuhe |
| 20 | Abtriebszahnriemenrad |
| 21 | Pneumatik-Zylinder |
| 22 | Pneumatik-Zylinder |
| 23 | Adapterstück |
| 24 | Schwestermagazin |
| 25 | Außenring |
| 26 | Greiferbacke |
| 27 | Greiferbacke |
| 28 | Werkzeugschaft |
| 29 | Zahnriemen |
| 30 | Innenring |
| 31 | Zahnkranzelement |
| 32 | Zahnradritzel |
| 33 | Belade- und Entladeöffnung |

## Patentansprüche

1. Vertikales Bearbeitungszentrum in Gantry-Bauweise, insbesondere für die spanende Fräs-, Bohr- und/oder Drehbearbeitung, mit einem zwei Seitenwandungen (4, 6) aufweisenden Maschinengestell (1) für die Aufnahme einer werkzeugtragenden und einer werkstücktragenden Baugruppe, mit einem bewegbaren Pick-Up-Werkzeugmagazinspeicher (5) innerhalb der beiden Seitenwandungen (4, 6) des Maschinengestells (1) für einen Werkzeugwechsel im Pick-Up-Verfahren, und mit einer Maschinenumhausung, die das Bearbeitungszentrum komplett umschließt, **dadurch gekennzeichnet, dass** sich unterhalb des Pick-Up-Werkzeugmagazinspeichers (5) ein freier Raum befindet, in dem sich noch mindestens ein weiteres, gleichartig zum Pick-Up-Werkzeugmagazinspeicher (5) aufgebautes Schwestermagazin (24) befindet, und dass ein kraftbetriebenes Umladehandling (15) innerhalb der Maschinenumhausung an einer Zugangsöffnung (9) des Maschinengestells (1) vorhanden ist, mit dem Bearbeitungswerkzeuge (12) von dem Schwestermagazin (24) in den Pick-Up-Werkzeugmagazinspeicher (5) und umgekehrt umgeladen werden können.

2. Vertikales Bearbeitungszentrum nach Anspruch 1, **dadurch gekennzeichnet, dass** der Pick-Up-Werkzeugmagazinspeicher (5) aus einem kreisringförmig aufgebauten, motorisch angetriebenen Werkzeugmagazin mit einem um eine vertikale Achse drehbar gelagerten Magazinring (10) mit Werkzeughaltern (11) zur Aufnahme von Bearbeitungswerkzeugen (12) besteht.

3. Vertikales Bearbeitungszentrum nach Anspruch 2, **dadurch gekennzeichnet, dass** der Pick-Up-Werkzeugmagazinspeicher (5) über einen Motor (13) mit Untersetzungsgetriebe antreibbar ist.

4. Vertikales Bearbeitungszentrum nach Anspruch 3, **dadurch gekennzeichnet, dass** das Untersetzungsgetriebe aus einer Zahnriemenstufe (16, 20, 29) und aus einer Zahnradstufe (31, 32) besteht.

5. Vertikales Bearbeitungszentrum nach einem der Ansprüche 2 bis 4, **dadurch gekennzeichnet, dass** der drehbare Magazinring (10) über ein Vier-Punkt-Wälzlager mit dem Maschinengestell (1) verbunden ist.

6. Vertikales Bearbeitungszentrum nach Anspruch 5, **dadurch gekennzeichnet, dass** das Vier-Punkt-Wälzlager einen Innenring (30) aufweist, über den das Vier-Punkt-Wälzlager fest mit dem Maschinengestell (1) verbunden, vorzugsweise verschraubt ist.

7. Vertikales Bearbeitungszentrum nach Anspruch 5 oder 6, **dadurch gekennzeichnet, dass** das Vier-Punkt-Wälzlager einen drehbaren Außenring (25) aufweist, an dem die Werkzeughalter (11) und ein Zahnkranzelement (31) für die Zahnradstufe des Untersetzungsgetriebes des Motors (13) angeordnet sind.

8. Vertikales Bearbeitungszentrum nach einem der Ansprüche 2 bis 7, **dadurch gekennzeichnet, dass** das Schwestermagazin (24) über ein kreisringförmiges Adapterstück (23) kraft- und/oder formschlüssig mit dem drehbaren Magazinring (10) des Pick-Up-Werkzeugmagazinspeichers (5) verbunden ist.

9. Vertikales Bearbeitungszentrum nach einem der Ansprüche 2 bis 8 **dadurch gekennzeichnet, dass** die Werkzeughalter (11) am Pick-Up-Werkzeugmagazinspeicher (6) und am Schwestermagazin (24) als elastisch verformbare U-förmige Halteklammern ausgeführt sind.

10. Vertikales Bearbeitungszentrum nach einem der vorhergehenden Ansprüche, **dadurch gekennzeichnet, dass** das Umladehandling (15) aus einer pneumatisch verstellbaren 2-Achseinheit mit einer vertikalen Hochachse, einer rechtwinklig dazu angeordneten horizontalen Längsachse und einem Werkzeuggreifer mit zwei pneumatisch verstellbaren Greiferbacken (26, 27) zum Halten eines genormten kegelförmigen Werkzeugschaftes (28) eines Bearbeitungswerkzeuges (12) besteht.

11. Vertikales Bearbeitungszentrum nach Anspruch 10, **dadurch gekennzeichnet, dass** die vertikale Hochachse und die horizontale Längsachse durch jeweils einen kolbenstangenlosen Pneumatik-Zylinder (21, 22) gebildet sind.

12. Verfahren zur automatischen Werkzeugumladung bei einem vertikalen Bearbeitungszentrum in Gantry-Bauweise gemäß einem der vorangehenden Ansprüchen, bei dem der maschinenseitige Pick-Up-Werkzeugmagazinspeicher (5) über eine in der Maschinensteuerung des Bearbeitungszentrums implementierte Werkzeugverwaltung mit seinem Schwestermagazin (24) oder mit seinen Schwestermagazinen (24) in Kommunikation steht und die Bearbeitungswerkzeuge (12) mit Hilfe des kraftbetriebenen Umladehandlings (15) nach einer von dem aktuell abzuarbeitenden Bearbeitungsprogramm vorgegebenen und nach weitgehend platzoptimierten Ablagekriterien erstellten Umladeladeliste gesteuert von einem Schwestermagazin (24) oder von mehreren Schwestermagazinen (24) in den Pick-Up-Werkzeugmagazinspeicher (5) oder umgekehrt so umgeladen werden können, dass der Werkzeugfüllgrad im Pick-Up-Werkzeugmagazinspeicher (5) optimal ausgefüllt ist und sich somit möglichst eine große Anzahl von Bearbeitungswerkzeugen (12) mit teilweise sehr unterschiedlichen geometrischen Abmessungen im maschinenseitigen Pick-Up-Werkzeugmagazinspeicher (5) befinden und dadurch auch relativ zeitnah vom Pick-Up-Werkzeugmagazinspeicher (5) in die Werkzeugspindel eingewechselt werden können.

13. Verfahren nach Anspruch 12, **dadurch gekennzeichnet, dass** die platzoptimierte Umladeliste vor der eigentlichen Werkstückbearbeitung durch einen in der Maschinensteuerung simulierten Ablauf des Bearbeitungsprogramms erstellt wird, so dass die automatische platzoptimierte Werkzeugumladung mit dem kraftbetriebenen Umladehandling (15) schon vor dem Start der eigentlichen Werkstückbearbeitung durchgeführt werden kann, damit vor dem eigentlichen Beginn der Werkstückbearbeitung der Pick-Up-Werkzeugmagazinspeicher (5) schon einen optimalen auf das Bearbeitungsprogramm abgestimmten Werkzeugfüllgrad aufweist.

14. Verfahren nach Anspruch 12, **dadurch gekennzeichnet, dass** die platzoptimierte Umladeliste während der Werkstückbearbeitung durch einen auf das aktuell ablaufende Bearbeitungsprogramm vorausschauenden Algorithmus erstellt wird, so dass die automatische platzoptimierte Werkzeugumladung stetig und hauptzeitparallel zur Werkstückbearbeitung durchgeführt werden kann, damit während der Werkstückbearbeitung der Pick-Up-Werkzeugmagazinspeicher (5) stetig und hauptzeitparallel auf seinen optimalen Werkzeugfüllgrad umgeladen werden kann.

15. Verfahren nach Anspruch 12, **dadurch gekennzeichnet, dass** die Umladeliste aus einem vom Maschinenbediener anwählbaren Mix von platzoptimierten und zeitoptimerten Ablagekriterien erstellt wird, so dass der Pick-Up-Werkzeugmagazinspeicher (5) über das kraftbetriebene Umladehandling (15) mehr zeitoptimiert oder mehr platzoptimiert mit Bearbeitungswerkzeugen (12) umgeladen werden kann.

## Claims

1. A vertical machining center in gantry construction, in particular for milling, drilling and/or turning machining by cutting, comprising: a machine frame (1) having two side walls (4, 6) configured to receive a tool-carrying assembly and a workpiece-carrying assembly, a moveable pickup tool magazine store (5) within the two side walls (4, 6) of the machine frame (1) configured for a tool change by the pickup method, and a machine enclosure which completely encloses the machining center, **characterized in that** below the pickup tool magazine store (5) there is a free space in which there is additionally at least one further spare magazine (24), equivalent in construction to the pickup tool magazine store (5), and that a force-driven reloading handling system (15), with which machining tools (12) can be reloaded from the spare magazine (24) into the pickup tool magazine store (5) and vice versa, is provided within the machine enclosure at an access opening (9) of the machine frame (1).

2. The vertical machining center of claim 1, **characterized in that** the pickup tool magazine store (5) includes a motor-driven tool magazine of a circular, annular construction, having a magazine ring (10), which is mounted rotatably about a vertical axis and provided with tool holders (11) for receiving machining tools (12).

3. The vertical machining center of claim 2, **characterized in that** the pickup tool magazine store (5) can be driven via a motor (13) including a gear reduction transmission.

4. The vertical machining center of claim 3, **characterized in that** the gear reduction transmission has a toothed belt stage (16, 20, 29) and a gearwheel stage (31, 32).

5. The vertical machining center of any one of claims 2 to 4, **characterized in that** the rotatable magazine ring (10) is connected to the machine frame (1) via a four-point roller bearing.

6. The vertical machining center of claim 5, **characterized in that** the four-point roller bearing includes an inner ring (30), via which the four-point roller bearing is rigidly connected, preferably screwed, to the machine frame (1).

7. The vertical machining center of claim 5 or 6, **characterized in that** the four-point roller bearing includes a rotatable outer ring (25), on which the tool holders (11) and a ring gear element (31) for the gearwheel stage of the gear reduction transmission of the motor (13) are arranged.

8. The vertical machining center of any one of claims 2 to 7, **characterized in that** the spare magazine (24) is connected to the rotatable magazine ring (10) of the pickup tool magazine store (5) positively and/or non-positively via a circular, annular adapter (23).

9. The vertical machining center of any one of claims 2 to 8, **characterized in that** the tool holders (11) on the pickup tool magazine store (6) and on the spare magazine (24) are configured as resiliently deformable U-shaped holding brackets.

10. The vertical machining center of any one of the preceding claims, **characterized in that** the reloading handling system (15) includes a pneumatically adjustable 2-axis unit, having a vertical axis, a horizontal longitudinal axis arranged perpendicular thereto, and a tool gripper having two pneumatically adjustable gripping jaws (26, 27) configured for holding a standardized conical tool shaft (28) of a machining tool (12).

11. The vertical machining center of claim 10, **characterized in that** the vertical axis and the horizontal longitudinal axis are each formed by a pneumatic cylinder (21, 22) without a piston rod.

12. A method for automatically reloading tools in a vertical machining center in gantry construction according to any one of the preceding claims, in which the machine-internal pickup tool magazine store (5) communicates via a tool management system, which is implemented in the machine control system of the machining center, with its spare magazine (24) or with its spare magazines (24), and the machining tools (12) can be reloaded with the help of the force-driven reloading handling system (15) according to a reloading list, which is predetermined by the machining program to be currently executed and is made according to substantially space-optimized storage criteria, controlled by a spare magazine (24) or a plurality of spare magazines (24), into the pickup tool magazine store (5) or vice versa in such a manner that the tool filling degree in the pickup tool magazine store (5) is optimally filled and thus a number of machining tools (12) that is as great as possible, with partly very different geometric dimensions, are positioned in the machine-internal pick-up tool magazine store (5) and can thereby be changed also relatively promptly from the pickup tool magazine store (5) into the tool spindle.

13. The method of claim 12, **characterized in that** the space-optimized reloading list is made prior to the workpiece machining operation proper by way of a machining program sequence simulated in the machine control system, so that the automatic space-optimized tool reloading with the force-driven reloading handling system (15) can already be carried out before the start of the workpiece machining operation proper, so that prior to the beginning of the workpiece machining operation proper the pickup tool magazine store (5) already has an optimum tool filling degree matched to the machining program.

14. The method of claim 12, **characterized in that** the space-optimized reloading list is made during the workpiece machining operation by way of an algorithm predicting the currently running machining program, so that the automatic space-optimized tool reloading operation can be carried out continuously and main-time parallel to the workpiece machining operation, so that during the workpiece machining operation the pickup tool magazine store (5) can be reloaded continuously and main-time parallel to its optimum tool filling degree.

15. The method of claim 12, **characterized in that** the reloading list is made from a mix which can be selected by a machine operator and consists of space-optimized and time-optimized storage criteria, so that the pick-up tool magazine store (5) can be reloaded via the force-driven reloading handling system (15) in a more time-optimized or more space-optimized condition with machining tools (12).

## Revendications

1. Centre d'usinage vertical en forme de portique, en particulier pour l'usinage par fraisage, forage et/ou tournage par enlèvement de copeaux, avec un bâti de machine (1) présentant deux parois latérales (4, 6) pour la réception d'un ensemble portant l'outil et d'un ensemble portant la pièce, avec un stockage de magasin d'outil pick-up (5) mobile dans les deux parois latérales (4, 6) du bâti de machine (1) pour un changement d'outil avec le principe du pick-up, et avec un carter machine qui entoure complètement le centre d'usinage, **caractérisé en ce qu'**un espace libre se trouve sous le stockage de magasin d'outil pick-up (5), dans lequel encore au moins un autre magasin frère (24) constitué de la même façon que le stockage de magasin d'outil pickup (5) se trouve, et **en ce qu'**un élément de manipulation de transfert (15) à moteur est présent dans le carter machine au niveau d'une ouverture d'accès (9) du bâti de machine (1), avec lequel des outils d'usinage (12) peuvent être transférés du magasin frère (24) dans le stockage de magasin d'outil pick-up (5) et inversement.

2. Centre d'usinage vertical selon la revendication 1, **caractérisé en ce que** le stockage de magasin d'outil pick-up (5) se compose d'un magasin d'outil entraîné par moteur, constitué en forme d'anneau de cercle avec un anneau de magasin (10) logé de manière à pouvoir tourner autour d'un axe vertical avec des supports d'outil (11) pour la réception d'outils d'usinage (12).

3. Centre d'usinage vertical selon la revendication 2, **caractérisé en ce que** le stockage de magasin d'outil pick-up (5) peut être entraîné par un moteur (13) avec un engrenage réducteur.

4. Centre d'usinage vertical selon la revendication 3, **caractérisé en ce que** l'engrenage réducteur se compose d'un étage de courroie dentée (16, 20, 29) et d'un étage de roue dentée (31, 32).

5. Centre d'usinage vertical selon l'une quelconque des revendications 2 à 4, **caractérisé en ce que** l'anneau de magasin rotatif (10) est relié par un palier à roulement à quatre points au bâti de machine (1).

6. Centre d'usinage vertical selon la revendication 5, **caractérisé en ce que** le palier à roulement à quatre points présente un anneau intérieur (30), par le biais duquel le palier à roulement à quatre points est fixement relié, de préférence est vissé, au bâti de machine (1).

7. Centre d'usinage vertical selon la revendication 5 ou 6, **caractérisé en ce que** le palier à roulement à quatre points présente un anneau extérieur rotatif (25), sur lequel sont agencés les supports d'outil (11) et un élément de couronne dentée (31) pour l'étage de roue dentée de l'engrenage réducteur du moteur (13).

8. Centre d'usinage vertical selon l'une quelconque des revendications 2 à 7, **caractérisé en ce que** le magasin frère (24) est relié par un adaptateur (23) en forme d'anneau de cercle à force et/ou par complémentarité de formes à l'anneau de magasin (10) rotatif du stockage de magasin d'outil pick-up (5).

9. Centre d'usinage vertical selon l'une quelconque des revendications 2 à 8, **caractérisé en ce que** les supports d'outil (11) sont réalisés sur le stockage de magasin d'outil pick-up (6) et sur le magasin frère (24) comme des pinces de retenue en forme de U déformables élastiquement.

10. Centre d'usinage vertical selon l'une quelconque des revendications précédentes, **caractérisé en ce que** l'élément de manipulation de transfert (15) se compose d'une unité à deux axes réglables par voie pneumatique avec un axe vertical, un axe longitudinal horizontal agencé à angles droits par rapport à celui-ci et une pince pour outils dotée de deux mâchoires de pince (26, 27) réglables par voie pneumatique pour la retenue d'une tige d'outil (28) conique normalisée d'un outil d'usinage (12).

11. Centre d'usinage vertical selon la revendication 10, **caractérisé en ce que** l'axe vertical et l'axe longitudinal horizontal sont respectivement formés par un vérin pneumatique (21, 22) sans tige de piston.

12. Procédé de transfert d'outil automatique pour un centre d'usinage vertical en forme de portique selon l'une quelconque des revendications précédentes, pour lequel le stockage de magasin d'outil pick-up (5) côté machine est en communication par une gestion d'outil implémentée dans la commande machine du centre d'usinage avec son magasin frère (24) ou avec ses magasins frères (24) et les outils d'usinage (12) peuvent être transférés par commande à l'aide de l'élément de manipulation de transfert (15) à moteur selon une liste de transfert établie selon des critères de réception assurant largement l'optimisation de l'espace et prescrite par le programme d'usinage en cours d'exécution d'un magasin frère (24) ou de plusieurs magasins frères (24) dans le stockage de magasin d'outil pick-up (5) ou inversement de sorte que le degré de remplissage d'outil soit optimal dans le stockage de magasin d'outil pick-up (5) et un grand nombre d'outils d'usinage (12) avec des dimensions géométriques en partie très différentes se trouvent ainsi si possible dans le stockage de magasin d'outil pick-up (5) et de ce fait peuvent aussi passer relativement rapidement du stockage de magasin d'outil pick-up (5) à la broche d'outil.

13. Procédé selon la revendication 12, **caractérisé en ce que** la liste de transfert assurant l'optimisation de l'espace est établie avant l'usinage de pièce réel par une exécution simulée dans la commande machine du programme d'usinage de sorte que le transfert d'outil automatique assurant l'optimisation de l'espace puisse déjà être réalisé avec l'élément de manipulation de transfert (15) à moteur avant le démarrage de l'usinage de pièce réel afin que le stockage de magasin d'outil pick-up (5) présente déjà avant le début réel de l'usinage de pièce un degré de remplissage d'outil optimal adapté au programme d'usinage.

14. Procédé selon la revendication 12, **caractérisé en ce que** la liste de transfert assurant l'optimisation de l'espace pendant l'usinage de pièce est établie par un algorithme prévoyant le programme d'usinage actuellement en cours de sorte que le transfert d'outil automatique assurant l'optimisation de l'espace puisse être réalisé en permanence et en temps masqué par rapport à l'usinage de pièce afin que le stockage de magasin d'outil pick-up (5) puisse être transféré en permanence et en temps masqué à son degré de remplissage d'outil optimal pendant l'usinage de pièce.

15. Procédé selon la revendication 12, **caractérisé en ce que** la liste de transfert est établie à partir d'un mélange pouvant être choisi par l'opérateur machine de critères de réception optimisés temporellement et assurant l'optimisation de l'espace de sorte que le stockage de magasin d'outil pick-up (5) puisse être transféré par l'élément de manipulation de transfert (15) à moteur de manière plus optimisée temporellement ou assurant plus l'optimisation de l'espace avec des outils d'usinage 12).
